(19) Europäisches Patentamt
European Patent Office
Office européen des brevets

(11) **EP 4 485 870 A1**

(12) **EUROPÄISCHE PATENTANMELDUNG**

(43) Veröffentlichungstag:
**01.01.2025 Patentblatt 2025/01**

(21) Anmeldenummer: **23182650.4**

(22) Anmeldetag: **30.06.2023**

(51) Internationale Patentklassifikation (IPC):
***H04L 27/26*** *(2006.01)*

(52) Gemeinsame Patentklassifikation (CPC):
**H04L 27/26265**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder: **Die Erfindernennung liegt noch nicht vor**

(74) Vertreter: **Siemens Patent Attorneys**
**Postfach 22 16 34**
**80506 München (DE)**

(54) **VERFAHREN UND SYSTEM ZUR ERZEUGUNG EINES OFDM-SENDE-SIGNALS MIT EINEM SENDE-FREQUENZBAND**

(57) Verfahren zur Erzeugung eines OFDM-Sende-Signals (s) mit einem Sende-Frequenzband, wobei aus bereitgestellten EingangsDaten (IN) ein OFDM-Daten-Signal (d) mit Unter-Träger-Signalen erzeugt wird, und ferner ein Auslöschungs-Signal (c) erzeugt wird, welches zum OFDM-Daten-Signal (d) addiert wird und als das OFDM-Sende-Signal (s) mit Sende-Emissionen gesendet wird, wobei das Auslöschungs-Signal (c) so konfiguriert ist, Sende-Emissionen des OFDM-Daten-Signals (d) außerhalb des Sende-Frequenzbandes im OFDM-Sende-Signal (s) zu unterdrücken.

## FIG 1

EP 4 485 870 A1

**Beschreibung**

*Unabhängig vom grammatikalischen Geschlecht eines bestimmten Begriffes sind Personen mit männlicher, weiblicher oder anderer Geschlechteridentität mit umfasst.*

Die Erfindung betrifft ein Verfahren und ein System zur Erzeugung eines OFDM-Sende-Signals mit einem Sende-Frequenzband, wobei aus bereitgestellten Eingangs-Daten ein OFDM-Daten-Signal mit Unter-Träger-Signalen erzeugt wird, und ferner ein Auslöschungs-Signal erzeugt wird, welches zum OFDM-Daten-Signal addiert wird und als das OFDM-Sende-Signal mit Sende-Emissionen gesendet wird.

Bei der Signal-Übertragung mithilfe von OFDM ("orthogonal frequency division multiplex") tritt häufig das Problem der "Out-of-Band"-Emission oder Nebenkeulen auf.

Dadurch können unerwünscht Interferenzen in den Unterkanälen induziert werden, was einen möglichen Modulationsgrad und damit die Datenrate verringern kann.

Es gibt bereits viele Methoden, mit diesem Problem umzugehen, aber es gibt derzeit keine allgemein zufriedenstellende Lösung, denn eine jeweilige Lösung hängt von spezifischen Parametern des OFDM-Übertragungssystems wie Bandbreite und Modulationsgrad ab, wofür es nicht für jede Kombination eine hinreichend gute Lösung vorliegt, wie spezielle Bandbreiten und ein hoher Modulationsgrad.

Im Stand der Technik wird dieses Problem durch Filterung der Nebenkeulen und/oder durch Fensterung bei der Abtastung des empfangenen Signals eher suboptimal gelöst, denn eine Filterung kann die Übertragung ungünstig beeinflussen und eine Fensterung kann die Symbolrate und damit die Datenrate verringern.

Es ist daher Aufgabe der Erfindung eine Lösung bereitzustellen, welche die Signal-Übertragung bei OFDM-Signalen verbessert.

Die Aufgabe wird durch ein Verfahren eingangs genannter Art gelöst, wobei das Auslöschungs-Signal so konfiguriert ist, Sende-Emissionen des OFDM-Daten-Signals außerhalb des Sende-Frequenzbandes im OFDM-Sende-Signal zu unterdrücken oder zu reduzieren.

Unter den Sende-Emissionen des OFDM-Daten-Signals werden alle OFDM-Träger verstanden, die innerhalb und außerhalb des Sende-Frequenzbandes liegen.

Unter einem "Out-of-Band"-Frequenzbereich wird daher jener Frequenzbereich in den Sende-Emissionen verstanden, in welchem keine Datenübertragung vorgesehen ist, sondern durch diverse Konfigurationen der OFDM-Übertragung oder bei der Erzeugung des OFDM-Signals unerwünschte Frequenz-Anteile entstehen, welche außerhalb des vorbestimmten Sende-Frequenzbands liegen. Diese unerwünschten Frequenz-Anteile können zwar ausreichend gering sein, um die Erfordernisse von maximal zulässigen Emissions-Pegeln außerhalb des Sende-Frequenzbands zu erfüllen, jedoch kann die Übertragungskapazität, wie beispielsweise durch Einschränkung von Bandbreite oder hohem Modulationsgrad im Übertragungskanal des OFDM-Signals dadurch unerwünscht eingeschränkt sein.

Das Sende-Frequenzband im OFDM-Sende-Signal ist beispielsweise durch eine vorbestimmte Übertragungsfunktion definiert, welche maximal zulässige Sende- beziehungsweise Sende-Emissions-Pegel mit einer vorbestimmten Bandbreite im Sende-Frequenzband festlegt, sowie maximal zulässige Emissions-Pegel außerhalb des Sende-Frequenzbands, welcher üblicherweise deutlich geringer ist, sowie eine Steilheit in der Übertragungsfunktion zwischen dem maximal zulässigen Sende-Pegel im Sende-Frequenzband und dem maximal zulässigen Emissions-Pegel außerhalb des Sende-Frequenzbands.

Dem OFDM-Daten-Signals wird ein Auslöschungs-Signal addiert, welches so konfiguriert ist, dass Träger in einem "Out-of-Band"-Frequenzbereich neben Trägern in einem "In-Band"-Frequenzbereich genutzt werden, um in den Sende-Emissionen ein verbessertes "Out-of-Band"-Frequenzspektrum zu erreichen.

Dadurch wird erreicht, dass die Übertragung in einem "Out-of-Band"-Frequenzbereich verbessert wird, und es kann eine höhere Übertragungsgeschwindigkeit bei geringerem Bandbreitenbedarf erzielt werden.

Mit anderen Worten wird durch die gezielte Addition eines entsprechenden Auslöschungs-Signals ein maximal zulässiger Emissions-Pegel außerhalb des Sende-Frequenzbands reduziert.

In einer Weiterbildung der Erfindung ist es vorgesehen, dass bei der Erzeugung des OFDM-Daten-Signals eine inverse Fast-Fourier-Transformation mit einer Fenster-Funktion angewandt wird, und die Fenster-Funktion ein Rechteck-Fenster ist.

Dadurch kann auf eine einfache Weise eine spektrale Effizienz gleichzeitig mit einer Reduktion der Nebenkeulen verbessert werden.

In einer Weiterbildung der Erfindung ist es vorgesehen, dass vor der Anwendung der inversen Fast-Fourier-Transformation eine erste Zeitverzögerung angewandt wird, und nach der Anwendung der inversen Fast-Fourier-Transformation eine Parallel-zu-Seriell-Konversion durchgeführt wird.

Dadurch kann auf eine einfache Weise eine einfache Systemarchitektur erreicht werden.

In einer Weiterbildung der Erfindung ist es vorgesehen, dass Verfahren nach einem der vorhergehenden Ansprüche, wobei bei der Erzeugung des Auslöschungs-Signals die Eingangs-Daten mit einer ersten Matrix multipliziert werden, welche so konfiguriert ist, das Auslöschungs-Signal so zu erzeugen, dass die Sende-Emissionen außerhalb des Sende-Frequenzbandes unterdrückt werden.

Dadurch kann auf eine einfache Weise eine Matrix zur Berechnung von Auslöschungs-Signalen zur Reduktion der Nebenkeulen verwendet werden.

In einer Weiterbildung der Erfindung ist es vorgesehen, dass bei der Erzeugung des Auslöschungs-Signals ein Verfahren nach dem Prinzip der erweiterten, aktiven Interferenz-Auslöschung im Zeit-Bereich erfolgt.

Dadurch kann auf eine einfache Weise das Auslöschungs-Signal im Zeit-Bereich bestimmt werden.

In einer Weiterbildung der Erfindung ist es vorgesehen, dass der Erzeugung des Auslöschungs-Signals ein Verfahren nach dem Prinzip der erweiterten, aktiven Interferenz-Auslöschung im Code-Bereich erfolgt.

Dadurch kann auf eine einfache Weise das Auslöschungs-Signal im Frequenz-Bereich bestimmt werden.

In einer Weiterbildung der Erfindung ist es vorgesehen, dass durch das Verfahren nach dem Prinzip der erweiterten, aktiven Interferenz-Auslöschung Daten-Vektoren erzeugt werden, für welche eine weitere Verarbeitung mithilfe eines Überlappungs-addierenden Speichers erfolgt.

Dadurch kann auf eine einfache Weise erreicht werden, dass mehrere Daten-Vektoren vorteilhaft aggregiert werden, welche länger sind als das vorgegebene Zeitraster und sich daher gegenseitig überlappen.

Dabei entstehen Daten-Vektoren, für welche eine weitere Verarbeitung mithilfe eines Überlappungs-addierenden Speichers erfolgt.

Dadurch kann auf eine einfache Weise eine weitere Implementierung für eine Reduktion der Nebenkeulen erfolgen.

In einer Weiterbildung der Erfindung ist es vorgesehen, dass bei der Erzeugung des Auslöschungs-Signals die inverse Fast-Fourier-Transformation mit einer Länge von einem vorbestimmten Faktor multipliziert mit der Länge eines OFDM-Symbols durchgeführt wird.

Der vorbestimmte Faktor kann beispielsweise 2, 3, 4, 5, 10, 15 oder ähnlich sein.

Es kann also eine inverse Fast-Fourier-Transformation mit einer um den Faktor größeren Länge verwendet werden, um das OFDM-Symbol gemeinsam mit dem Auslöschungs-Signal zu erzeugen, für welche eine Verarbeitung mithilfe eines Überlappungs-addierenden Speichers erfolgt.

In einer Weiterbildung der Erfindung ist es vorgesehen, dass bei der Erzeugung des Auslöschungs-Signals die Eingangs-Daten mit einer ersten Matrix multipliziert werden, welche so konfiguriert ist, das Auslöschungs-Signal so zu erzeugen, dass die Sende-Emissionen außerhalb des Sende-Frequenzbandes unterdrückt werden.

Dadurch kann auf eine einfache Weise eine weitere Implementierung für eine Reduktion der Nebenkeulen erfolgen.

In einer Weiterbildung der Erfindung ist es vorgesehen, dass die erste Matrix durch eine Summe aus einem ersten Summanden mit einer Faltung der Unter-Träger-Signale mit einer sinc-Funktion und einem zweiten Summanden mit einer zweiten Matrix und einer dritten Matrix gebildet ist, wobei die zweite Matrix und die dritte Matrix jeweils kleiner sind als die erste Matrix.

Dadurch kann auf eine einfache Weise eine weitere Implementierung für eine Reduktion der Nebenkeulen erfolgen.

In einer Weiterbildung der Erfindung ist es vorgesehen, dass, wenn die inverse Fast-Fourier-Transformation mit einer Länge von einem vorbestimmten Faktor multipliziert mit der Länge eines OFDM-Symbols durchgeführt wird, ferner durch die Erzeugung des OFDM-Auslöschungs-Signals Daten-Vektoren erzeugt werden, für welche eine Zwischenspeicherung mithilfe eines Überlappungs-gesicherten Speichers erfolgt.

Dadurch kann auf eine einfache Weise erreicht werden, dass mehrere Daten-Vektoren vorteilhaft aggregiert werden, welche jedoch länger sind, als das vorgegebene Zeitraster und sich daher gegenseitig überlappen, und innerhalb eines vorgegebenen Zeitrasters verlustfrei aneinandergefügt werden können.

In einer Weiterbildung der Erfindung ist es vorgesehen, dass die Eingangs-Daten durch eine zweite Zeitverzögerung zunächst zeitverzögert werden und verzögerte Eingangs-Daten bilden, welche der inversen Fast-Fourier-Transformation bereitgestellt werden, und die verzögerten Eingangs-Daten von den Eingangs-Daten subtrahiert werden und Differenz-Eingangs-Daten bilden, welche dem erfindungsgemäßen Verfahren zur Erzeugung des Auslöschungs-Signals bereitgestellt werden.

Die erfindungsgemäße Aufgabe wird auch durch ein System zur Erzeugung eines OFDM-Sende-Signals mit einem Sende-Frequenzband gelöst, umfassend eine Rechenvorrichtung und einen Speicher, sowie einem Sender, wobei das System dazu eingerichtet ist, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:

Fig. 1-2 eine schematische Darstellung eines OFDM-Systems mit einem Ausführungsbeispiel der Erfindung im Zeit-Bereich,

Fig. 3-4 eine Darstellung eines OFDM-Symbols und ein Auslöschung-Signal,

Fig. 5 eine schematische Darstellung der Funktionsweise eines Überlappungs-addierenden Speichers,

Fig. 6-7 eine schematische Darstellung eines OFDM-Systems mit einem weiteren Ausführungsbeispiel der Erfindung im Frequenz-Bereich,

Fig. 8-9 eine schematische Darstellung eines

OFDM-Systems mit weiterer Ausführungsbeispielen der Erfindung,

Fig. 10-11 eine schematische Darstellung eines OFDM-Systems mit weiterer Ausführungsbeispielen der Erfindung, mit differenzbildender Vorverarbeitung.

Es ist klar, dass für ein OFDM-Daten-Übertragungssystem noch weitere Komponenten benötigt werden als in den Figuren dargestellt.

Zu besserer Übersicht wurde jedoch auf diese Komponenten in den Figuren verzichtet.

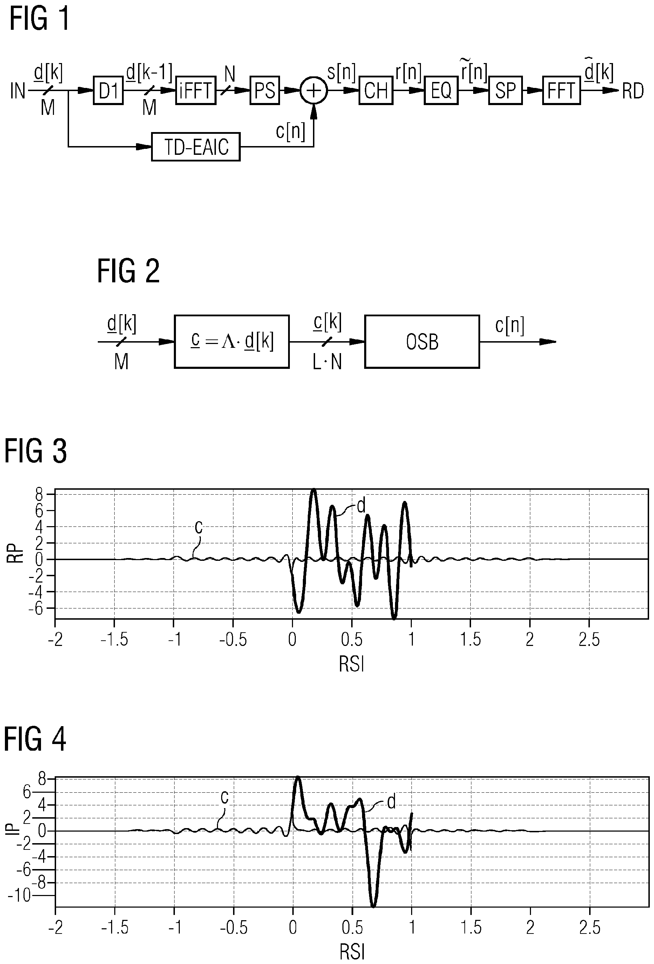

**Fig. 1** und **Fig. 2** zeigen eine schematische Darstellung eines OFDM-Systems mit einem Ausführungsbeispiel der Erfindung im Zeit-Bereich.

Eingangs-Daten IN werden in Form eines Daten-Signals $d[k]$ einer ersten Zeitverzögerungsvorrichtung D1 zugeführt, welche ein zeitverzögertes Daten-Signal $d[k-l]$ erzeugt.

Das zeitverzögerte Daten-Signal $d[k-l]$ wird einer inversen Fast-Fourier-Transformations-Vorrichtung iFFT zugeführt, welche ein entsprechendes Signal im Frequenzbereich berechnet und anschließend mithilfe einer Parallel-zu-Seriell-Konverter-Vorrichtung PS in ein entsprechendes Daten-Signal im Zeitbereich konvertiert.

Das Daten-Signal $d[k]$ wird einer "time domain - extended active interference cancellation"-Vorrichtung TD-EAIC zugeführt, welche ein Auslöschungs-Signal **c[n]** im Zeitbereich erzeugt.

Die Eingangs-Daten IN entsprechen einer jeweiligen Repräsentation $d[k]$ oder $d[k-l]$ dem Daten-Signal in einer jeweiligen Domäne zu verschiedenen Zeitpunkten im System.

Ausgangs-Daten RD entsprechen einer Repräsentation durch $\hat{d}[k]$.

Signale **s[n]**, $r[n]$ oder $\tilde{r}[n]$ entsprechen Signalen im Frequenzbereich.

Das Auslöschungs-Signal **c[n]** dient dazu, Nebenkeulen durch eine aktive Interferenz-Auslöschung mithilfe des EAIC-Verfahrens im Zeitbereich zu unterdrücken und ein entsprechendes Spektrum des OFDM-Signals zu formen, insbesondere um Sende-Emissionen des OFDM-Daten-Signals d außerhalb des Sende-Frequenzbandes im OFDM-Sende-Signal s zu unterdrücken.

Vor der Signalübertragung werden einem OFDM-Sendesignal also EAIC-Signale als Auslöschungssignale für unerwünschte Störungen wie Nebenkeulen hinzugefügt.

Mit anderen Worten wird dem OFDM-Signal ein spezielles Auslösch-Signal hinzugefügt, welches die "Out-of-Band"-Emissionen deutlich reduziert, und welches den Inhalt der OFDM-Unterkanäle $d[k]$, die in der Regel auf M "In-Band"-Trägern platziert sind, nicht - oder nur schwach - stört, während die "Of-Band-Träger" bei einem gewöhnlichen OFDM-Sender bei Null belassen und am Empfänger ignoriert werden.

Das Daten-Signal im Zeitbereich und das Auslöschungs-Signal **c[n]** werden summiert und in ein Sende-Signal $s[n]$ konvertiert.

Das Sende-Signal $s[n]$ wird über einen Übertragungs-Kanal CH an einen Empfänger übertragen und dort als Empfangssignal **r[n]** empfangen.

Ein optionaler Equalizer EQ kann eine Entzerrung von Verzerrungen, die durch den Kanal CH entstanden sind, reduzieren oder kompensieren, und als entzerrtes Signal $\tilde{r}[n]$ weiterverarbeitet wird.

Eine Vorrichtung zur Seriell-zu-Parallel-Konvertierung SP erzeugt aus dem entzerrten Signal $\tilde{r}[n]$ ein diskretes Signal, welches von einer Fast-Fourier-Transformations-Vorrichtung FFT in den Frequenz-Bereich konvertiert werden, und ein Empfangs-Daten-Signal $\hat{d}[k]$ erzeugt, aus welchen Ausgangs-Daten RD bestimmt werden.

Das Verfahren erzeugt somit ein OFDM-Sende-Signal s mit einem Sende-Frequenzband.

Aus bereitgestellten Eingangs-Daten IN wird ein OFDM-Daten-Signal d mit Unter-Träger-Signalen erzeugt.

Ferner wird ein Auslöschungs-Signal c erzeugt, welches zum OFDM-Daten-Signal d addiert wird und als das OFDM-Sende-Signal s mit Sende-Emissionen gesendet wird.

Das Auslöschungs-Signal c dabei so konfiguriert, um Sende-Emissionen des OFDM-Daten-Signals d außerhalb des Sende-Frequenzbandes im OFDM-Sende-Signal s zu unterdrücken.

Bei der Erzeugung des OFDM-Daten-Signals d kann eine inverse Fast-Fourier-Transformation iFFT mit einer Fenster-Funktion angewandt werden, wobei die Fenster-Funktion ein Rechteck-Fenster (engl. "rectangular pulse shape") ist.

Vor der Anwendung der inversen Fast-Fourier-Transformation iFFT kann eine erste Zeitverzögerung D1 angewandt werden.

Nach der Anwendung der inversen Fast-Fourier-Transformation iFFT kann eine Parallel-zu-Seriell-Konversion PS durchgeführt werden.

Das Daten-Signal $d[k]$ wird zunächst einer Transformations-Operation mit einer Matrix **A** unterzogen und ein diskretes Auslöschungs-Signal $c[k]$.

Es wird das Signal durch eine lineare Gleichung erzeugt, wobei der Subkanal-Inhalt als Eingabe dient.

Da sowohl die Eingabe als auch die Ausgabe mehrdimensional ist, ist diese Gleichung eine Matrixgleichung mit der Matrix **A**.

Die Länge des Auslöschungs-Signals in Form von Vektoren **c** ist L*N und damit länger als die OFDM-Symbole mit der Größe N, so dass sich die **c**-Vektoren aufeinanderfolgender OFDM-Symbole überlappen.

Die Überlappung ist symmetrisch, d.h. ein c-Vektor eines bestimmten OFDM-Symbols k überlappt sich mit 1, 2 oder mehr vorhergehenden und mit der gleichen Anzahl nachfolgender OFDM-Symbole.

Um dies zu erreichen, überlappt und serialisiert ein "Overlap-Save-Buffer", also ein Überlappungs-addierender Zwischenspeicher OAB die *c*-Vektoren zu einem Sample-Stream **c[n]**.

Die Rechenkomplexität der Matrixgleichung ist -L*N*M, wobei L*N die Länge des Ergebnisses **c** und M die Anzahl der Unter-träger und damit die Länge von $\underline{d}[k]$ ist.

In Fällen, in denen N und M hoch sind, ist auch der Rechenaufwand hoch.

Um den Rechenaufwand zu reduzieren, kann die Matrix A in zwei kleinere Matrizen U und V zerlegt werden.

Da die Größe von U L*N-Zeilen zu $N_s$-Spalten und die Größe von V NS-Zeilen zu M-Spalten ist, ist die Rechenkomplexität jetzt L*N*NS + NS*M, was in diesem Fall kleiner ist, da $N_s$ die Anzahl der signifikanten singulären Werte von $\Lambda$ ist und normalerweise nur etwa 4 bis 10 beträgt.

$$\underline{c} = \mathrm{U} \cdot (\mathrm{V} \cdot \underline{d}[k])$$

Bei der Erzeugung des Auslöschungs-Signals c können die Eingangs-Daten IN also mit einer ersten Matrix A multipliziert werden, welche so konfiguriert ist, das Auslöschungs-Signal c so zu erzeugen, dass die Sende-Emissionen außerhalb des Sende-Frequenzbandes unterdrückt werden.

Bei der Erzeugung des Auslöschungs-Signals c kann ein Verfahren nach dem Prinzip der erweiterten, aktiven Interferenz-Auslöschung im Zeit-Bereich TD-EAIC erfolgen.

Durch das Verfahren nach dem Prinzip der erweiterten, aktiven Interferenz-Auslöschung EAIC können Daten-Vektoren erzeugt werden, für welche eine Zwischenspeicherung mithilfe eines Überlappungs-addierenden Speichers OAB erfolgt.

**Fig. 3** und **Fig. 4** stellen bespielhaft ein OFDM-Symbol **d** und ein Auslöschungs-Signal **c** über den relativen Symbol-Index RSI dar, in Fig. 3 den Real-Anteil der Signale, in Fig. 4 den Imaginär-Anteil der Signale.

Das Auslöschungs-Signal c beträgt hier das fünffache (L=5) eines OFDM-Symbols d aus dem Daten-Signal $\underline{d}[k]$.

Die Bereiche links vom relativen Symbol-Index RSI Null und rechts vom relativen Symbol-Index RSI Eins überlappen mit benachbarten OFDM-Symbolen aus dem Daten-Signal $\underline{d}[k]$.

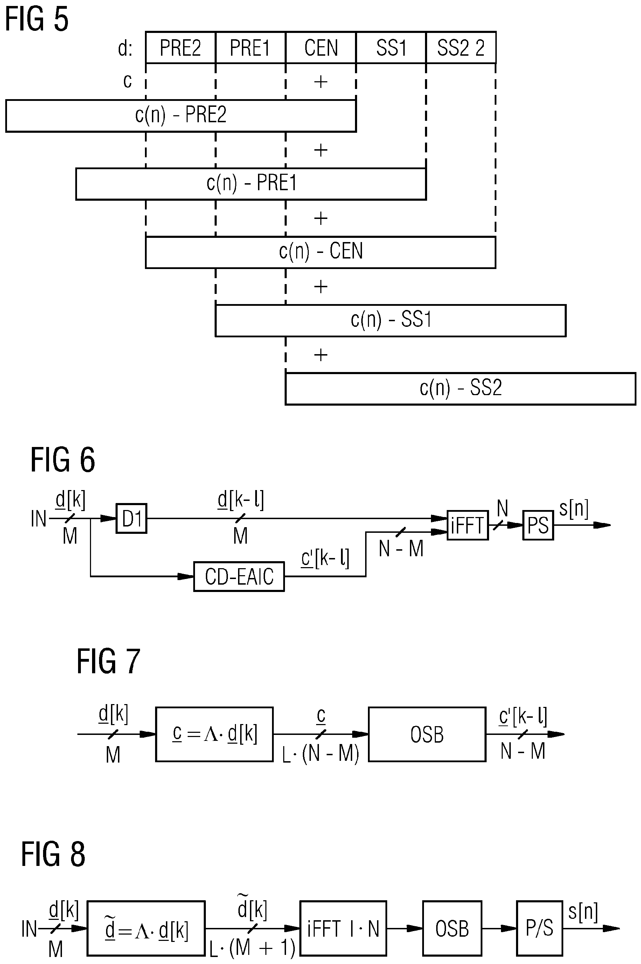

**Fig. 5** zeigt eine schematische Darstellung der prinzipiellen Funktionsweise eines Überlappungs-addierenden Speichers OAB.

Das Auslöschungs-Signal c wird aus mehreren OFDM-Symbolen d aus dem Daten-Signal $\underline{d}[k]$ zeitlich versetzt, gemäß einem vom OFDM-System vorgegebenen Zeitraster, zusammengesetzt und addiert.

Zu einem zentralen Symbol CEN aus dem Daten-Signal $\underline{d}[k]$ werden ein vorhergehendes Symbol PRE1 *(d[k* - **1])** und ein diesem Symbol PRE1 nochmals vorhergehendes Symbol PRE2 *(d[k* - **2])** addiert.

Ferner wird dem zentralen Symbol CEN und den beiden vorhergehenden Symbolen PRE1, PRE2 ein nachfolgendes Symbol SS1 *(d[k* + **1])** und ein diesem Symbol nachfolgendes Symbol SS2 ($\underline{d}$[*k*+2]) addiert.

Die Summe der Symbole PRE1, PRE2, CEN, SS1 und SS2 bildet das Sende-Signal **s[n]**.

**Fig. 6** und **Fig. 7** stellen ein weiteres Ausführungsbeispiel der Erfindung im Frequenzbereich dar.

Dies hat den Vorteil, dass die Wahl des Frequenzbandes flexibler sein kann.

Die Systemarchitektur ist dahingehend gegenüber dem vorhergehenden Beispiel abgeändert, dass das Auslöschungs-Signals c direkt der inversen Fast-Fourier-Transformation iFFT zugeführt wird.

Bei der Erzeugung des Auslöschungs-Signals c kann daher ein Verfahren nach dem Prinzip der erweiterten, aktiven Interferenz-Auslöschung im Code-Bereich CD-EAIC erfolgen.

Das erzeugte Signal liegt in Form einer Reihe an Vektoren ***c'[k-l]*** vor, welche dazu verwendet werden, um "off-band"-Träger aufzufüllen.

Der Ergebnisvektor c der Matrix-Gleichung weist eine Länge von L* (N-M) auf, und die Reihe von Vektoren ***c'[k-l]*** weist lediglich eine Länge von N-M auf.

Es wird ein Überlappungs-addierenden Speicher OAB angewandt.

Die Anzahl signifikanter singulärer Werte für die Matrix A ist in der Regel sehr gering, etwa 4 bis 10, wodurch die Matrix in zwei kleinere Matrizen U und V zerlegt und so der Berechnungsaufwand reduziert werden kann.

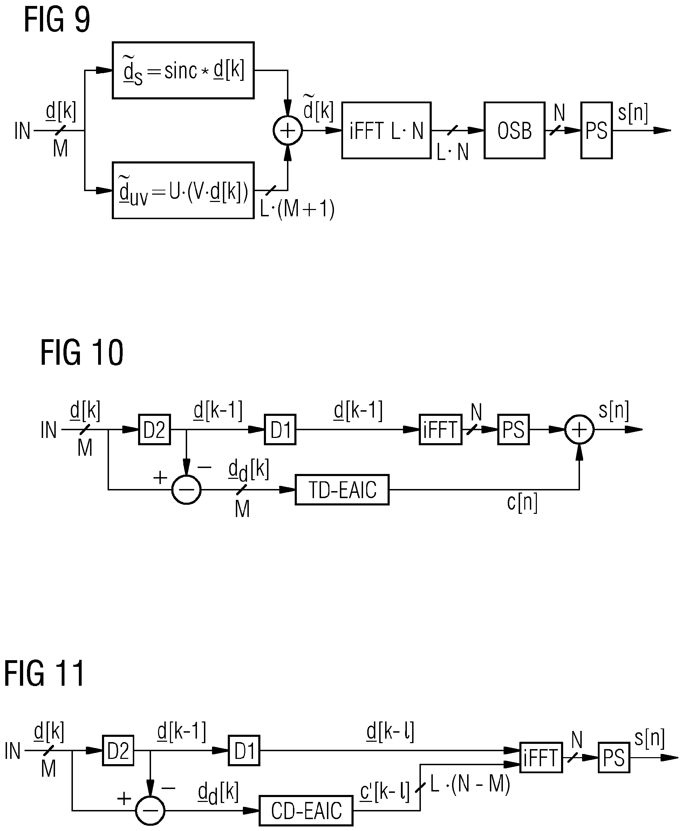

**Fig. 8** und **Fig. 9** stellen weitere Ausführungsbeispiele der Erfindung dar.

Eine Ausführungsform in der Fig. 8 weist eine um einen Faktor L längere inversen Fast-Fourier-Transformation iFFT auf.

Diese weitere Realisierung verwendet eine Größe der inversen Fast-Fourier-Transformation iFFT von L*N statt nur N und erzeugt somit direkt Symbole inklusive dem zugehörigen Auslöschungs-Signal c, die nur überlappt werden müssen, um das Sendesignal zu bilden.

Bei der Erzeugung des Auslöschungs-Signals c kann die inverse Fast-Fourier-Transformation iFFT mit einer Länge von einem vorbestimmten Faktor L multipliziert mit der Länge eines OFDM-Symbols N durchgeführt werden.

Bei der Erzeugung des Auslöschungs-Signals c kann die Eingangs-Daten IN mit einer ersten Matrix $\Lambda$ multipliziert werden, welche so konfiguriert ist, das Auslöschungs-Signal c so zu erzeugen, dass die Sende-Emissionen außerhalb des Sende-Frequenzbandes unterdrückt werden.

Eine Zerlegung der Matrix A ist nicht immer direkt möglich, da zunächst alle singulären Werte signifikant sind.

Um die Rechenkomplexität zu reduzieren, wird die 11-Multiplikation zunächst in eine Summe zerlegt, wobei die erste Summe eine Faltung des Unterkanalinhalts mit einer sinc-Funktion ist und der Rest nun in U und V zerlegt werden kann, was eine weitere Ausführungsvariante der Erfindung nach der Fig. 9 darstellt.

Durch dieses Verfahren kann die Berechnung vereinfacht werden und eine einfachere Rechenvorrichtung eingesetzt werden.

Die erste Matrix A kann daher durch eine Summe aus einem ersten Summanden $d_s$ mit einer Faltung der Unter-Träger-Signale mit einer sinc-Funktion und einem zweiten Summanden $d_{UV}$ mit einer zweiten Matrix U und einer dritten Matrix V gebildet werden, wobei die zweite Matrix U und die dritte Matrix V jeweils kleiner sind als die erste Matrix A.

Durch die Erzeugung des Auslöschungs-Signals c können Daten-Vektoren erzeugt werden, für welche eine Verarbeitung mithilfe eines Überlappungs-addierenden Speichers OAB erfolgt.

**Fig. 10** und **Fig. 11** stellen weitere Ausführungsbeispiele der Erfindung jeweils für den Zeit-Bereich und den Frequenz-Bereich dar, welches auf Differenzwerten des Unter-Kanal-Inhalt basiert.

Dadurch kann dieser Ansatz auch für eine "cycle prefix"-OFDM, kurz CP-OFDM, verwendet werden.

Die Eingangs-Daten IN können dabei durch eine zweite Zeitverzögerung D2 zunächst zeitverzögert werden und verzögerte Eingangs-Daten bilden, welche der inversen Fast-Fourier-Transformation iFFT bereitgestellt werden, und die verzögerten Eingangs-Daten von den Eingangs-Daten IN subtrahiert werden und Differenz-Eingangs-Daten $d_d$ bilden, welche dem erfindungsgemäßen Verfahren zur Erzeugung des Auslöschungs-Signals c bereitgestellt werden, wobei eine Zerlegung der Matrix $\Lambda$ immer möglich ist.

**Bezugszeichenliste:**

| | |
|---|---|
| c | Auslöschungs-Signal |
| CEN | zentrales Symbol (engl. "central symbol") |
| CD-EAIC | Erweiterte, aktive Interferenz-Auslöschungs-Vorrichtung im Code-Bereich, engl. "time domain - extended active interference cancellation" |
| CH | Kanal, engl. "channel" |
| CP-OFDM | engl. "cycle prefix" |
| d | Daten-Signal |
| D1, D2 | Zeitverschiebung, engl. "delay" |
| $d_d$ | Differenz-Eingangs-Daten |
| $d_s$, $d_{UV}$ | Summanden |
| EQ | Kanal-Verzerrung, engl. "equalizer" |
| FFT | Fast-Fourier-Transformation |
| iFFT | inverse Fast-Fourier-Transformation |
| IN | Eingangs-Daten |
| L | Längen-Faktor des Auslöschungs-sig- |

| | |
|---|---|
| | nals |
| M | Anzahl an Unter-Trägern im OFDM-Signal |
| N | Länge eines OFDM-Symbols |
| OAB | Überlappungs-addierender Zwischenspeicher, engl. "overlap-add-buffer" |
| PRE1, PRE2 | vorhergehendes Symbol (engl. "previous symbol") |
| PS | Parallel-zu-Seriell Konversion |
| RSI | relativer Symbol-Index |
| s | Sendesignal |
| SP | Seriell-zu-Parallel Konversion |
| SS1, SS2 | nachfolgendes Symbol (engl. "subsequent symbol") |
| TD-EAIC | Erweiterte, aktive Interferenz-Auslöschungs-Vorrichtung im Zeit-Bereich, engl. "time domain - extended active interference cancellation" |

**Patentansprüche**

1. Verfahren zur Erzeugung eines OFDM-Sende-Signals (s) mit einem Sende-Frequenzband, wobei aus bereitgestellten Eingangs-Daten (IN) ein OFDM-Daten-Signal (d) mit Unter-Träger-Signalen erzeugt wird, und ferner ein Auslöschungs-Signal (c) erzeugt wird, welches zum OFDM-Daten-Signal (d) addiert wird und als das OFDM-Sende-Signal (s) mit Sende-Emissionen gesendet wird,

   **dadurch gekennzeichnet, dass** das Auslöschungs-Signal (c) so konfiguriert ist, Sende-Emissionen des OFDM-Daten-Signals (d) außerhalb des Sende-Frequenzbandes im OFDM-Sende-Signal (s) zu unterdrücken.

2. Verfahren nach dem vorhergehenden Anspruch, wobei bei der Erzeugung des OFDM-Daten-Signals (d) eine inverse Fast-Fourier-Transformation (iFFT) mit einer Fenster-Funktion angewandt wird, und die Fenster-Funktion ein Rechteck-Fenster ist.

3. Verfahren nach dem vorhergehenden Anspruch, wobei vor der Anwendung der inversen Fast-Fourier-Transformation (iFFT) eine erste Zeitverzögerung (D1) angewandt wird, und nach der Anwendung der inversen Fast-Fourier-Transformation (iFFT) eine Parallel-zu-Seriell-Konversion (PS) durchgeführt wird.

4. Verfahren nach einem der vorhergehenden Ansprüche, wobei bei der Erzeugung des Auslöschungs-Signals (c) die Eingangs-Daten (IN) mit einer ersten Matrix (A) multipliziert werden, welche so konfiguriert ist, das Auslöschungs-Signal (c) so zu erzeugen, dass die Sende-Emissionen außerhalb des Sende-Frequenzbandes unterdrückt werden.

5. Verfahren nach einem der Ansprüche 1 oder 2, wobei bei der Erzeugung des Auslöschungs-Signals (c) ein Verfahren nach dem Prinzip der erweiterten, aktiven Interferenz-Auslöschung im Zeit-Bereich (TD-EAIC) erfolgt.

6. Verfahren nach einem der Ansprüche 1 oder 2, wobei bei der Erzeugung des Auslöschungs-Signals (c) ein Verfahren nach dem Prinzip der erweiterten, aktiven Interferenz-Auslöschung im Code-Bereich (CD-EAIC) erfolgt.

7. Verfahren nach einem der Ansprüche 4 oder 5, wobei durch das Verfahren nach dem Prinzip der erweiterten, aktiven Interferenz-Auslöschung (EAIC) Daten-Vektoren erzeugt werden, für welche eine Zwischenspeicherung mithilfe eines Überlappungs-addierenden Speichers (OAB) erfolgt.

8. Verfahren nach Anspruch 2 oder 3, wobei bei der Erzeugung des Auslöschungs-Signals (c) die inverse Fast-Fourier-Transformation (iFFT) mit einer Länge von einem vorbestimmten Faktor (L) multipliziert mit der Länge eines OFDM-Symbols (N) durchgeführt wird.

9. Verfahren nach dem vorhergehenden Anspruch, wobei bei der Erzeugung des Auslöschungs-Signals (c) die Eingangs-Daten (IN) mit einer ersten Matrix (A) multipliziert werden, welche so konfiguriert ist, das Auslöschungs-Signal (c) so zu erzeugen, dass die Sende-Emissionen außerhalb des Sende-Frequenzbandes unterdrückt werden.

10. Verfahren nach dem vorhergehenden Anspruch, wobei die erste Matrix (A) durch eine Summe aus einem ersten Summanden ($d_s$) mit einer Faltung der Unter-Träger-Signale mit einer sinc-Funktion und einem zweiten Summanden ($d_{UV}$) mit einer zweiten Matrix (U) und einer dritten Matrix (V) gebildet ist, wobei die zweite Matrix (U) und die dritte Matrix (V) jeweils kleiner sind als die erste Matrix (A).

11. Verfahren nach dem vorhergehenden Anspruch, wobei durch die Erzeugung des Auslöschungs-Signals (c) Daten-Vektoren erzeugt werden, für welche eine Zwischenspeicherung mithilfe eines Überlappungs-addierenden Speichers (OAB) erfolgt.

12. Verfahren nach Anspruch 3, wobei die Eingangs-Daten (IN) durch eine zweite Zeitverzögerung (D2) zunächst zeitverzögert werden und verzögerte Eingangs-Daten bilden, welche der inversen Fast-Fourier-Transformation (iFFT) bereitgestellt werden, und die verzögerten Eingangs-Daten von den Eingangs-Daten (IN) subtrahiert werden und Differenz-Eingangs-Daten ($d_d$) bilden, welche dem Verfahren zur Erzeugung des Auslöschungs-Signals (c) nach Anspruch 4 oder 5 bereitgestellt werden.

13. System zur Erzeugung eines OFDM-Sende-Signals mit einem Sende-Frequenzband, umfassend eine Rechenvorrichtung und einen Speicher, sowie einem Sender, wobei das System dazu eingerichtet ist, das Verfahren nach einem der vorhergehenden Ansprüche auszuführen.

FIG 1

FIG 2

FIG 3

FIG 4

## FIG 5

| d: | PRE2 | PRE1 | CEN | SS1 | SS2 2 |
|---|---|---|---|---|---|
| c | | | + | | |

c(n) - PRE2

+

c(n) - PRE1

+

c(n) - CEN

+

c(n) - SS1

+

c(n) - SS2

## FIG 6

IN $\xrightarrow{\underline{d}[k]}_{M}$ → D1 → $\xrightarrow{\underline{d}[k-\ell]}_{M}$ → iFFT $\xrightarrow{N}$ → PS $\xrightarrow{s[n]}$

→ CD-EAIC $\xrightarrow{\underline{c}'[k-\ell]}$ $\xrightarrow{N-M}$

## FIG 7

$\xrightarrow{\underline{d}[k]}_{M}$ → $\underline{c}=\Lambda\cdot\underline{d}[k]$ → $\dfrac{\underline{c}}{L\cdot(N-M)}$ → OSB → $\dfrac{\underline{c}'[k-\ell]}{N-M}$

## FIG 8

IN $\xrightarrow{\underline{d}[k]}_{M}$ → $\underline{\widetilde{d}}=\Lambda\cdot\underline{d}[k]$ → $\dfrac{\widetilde{d}[k]}{L\cdot(M+1)}$ → iFFT I·N → OSB → P/S $\xrightarrow{s[n]}$

# FIG 9

# FIG 10

# FIG 11

Europäisches Patentamt
European Patent Office
Office européen des brevets

# EUROPÄISCHER RECHERCHENBERICHT

Nummer der Anmeldung

**EP 23 18 2650**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHIQIANG WANG ET AL: "Sidelobe Suppression Using Extended Active Interference Cancellation with Self-Interferences Constraint for Cognitive OFDM Systems", MOBILE NETWORKS AND APPLICATIONS, SPRINGER US, NEW YORK, Bd. 16, Nr. 5, 1. Oktober 2011 (2011-10-01), Seiten 544-552, XP058005687, ISSN: 1383-469X, DOI: 10.1007/S11036-010-0242-X * sections 3-5 * ----- | 1-13 | INV. H04L27/26 |
| X,P | FRANKENBERG ROBERT ET AL: "OFDM Sidelobe Suppression by Time Domain Extended Active Interference Cancellation", IEEE EUROCON 2023 – 20TH INTERNATIONAL CONFERENCE ON SMART TECHNOLOGIES, IEEE, 6. Juli 2023 (2023-07-06), Seiten 445-449, XP034392693, DOI: 10.1109/EUROCON56442.2023.10198999 [gefunden am 2023-08-07] * das ganze Dokument * ----- | 1-13 | |
| | | | RECHERCHIERTE SACHGEBIETE (IPC) |
| | | | H04L |

Der vorliegende Recherchenbericht wurde für alle Patentansprüche erstellt

| Recherchenort | Abschlußdatum der Recherche | Prüfer |
|---|---|---|
| Berlin | 4. Dezember 2023 | Feng, Mei |

EPO FORM 1503 03.82 (P04C03)